# EUROPEAN PATENT SPECIFICATION

(11) **EP 2 285 211 B1**
(45) Date of publication and mention of the grant of the patent: **24.07.2019**
(21) Application number: 09742920.3
(22) Date of filing: 06.05.2009
(51) Int. Cl.: A01N 1/02

(54) **APPARATUS FOR HOUSING AN ORGAN DURING EVALUATION AND PRESERVATION**
VORRICHTUNG ZUR AUFNAHME EINES ORGANS WÄHREND BEWERTUNG UND KONSERVIERUNG
DISPOSITIF DESTINÉ À CONTENIR UN ORGANE PENDANT DES OPÉRATIONS D'ÉVALUATION ET DE CONSERVATION

(30) Priority: 06.05.2008 SE 0801000; 26.09.2008 SE 0802035; 10.11.2008 US 198740 P; 05.01.2009 SE 0900009
(43) Date of publication of application: 23.02.2011
(73) Proprietor: XVIVO Perfusion AB, 412 51 Göteborg (SE)
(72) Inventor: STEEN, Stig, S-224 77 Lund (SE); PASKEVICIUS, Audrius, S-224 77 LUND - (SE); KING, Benjamin Martin, Takaka 7182 (NZ)
(74) Representative: Asketorp, Göran
(86) International application number: PCT/SE2009/000228
(87) International publication number: WO 2009/136838

(56) References cited:
- WO-A1-02/35929
- DE-A1- 10 121 159
- US-A- 5 586 438
- US-A- 5 807 737
- US-A1- 2005 147 958
- US-A1- 2005 255 442
- US-A1- 2008 017 194
- STIG STEEN ET AL: "Transplantation of lungs from non-heart-beating donors after functional assessment ex vivo", THE ANNALS OF THORACIC SURGERY, vol. 76, no. 1, 1 July 2003 (2003-07-01), pages 244-252, XP055336904, United States ISSN: 0003-4975, DOI: 10.1016/S0003-4975(03)00191-7

## Description

### FIELD OF INVENTION

The present invention relates to an apparatus comprising a vessel for preservation and evaluation of an organ, such as lungs, ex vivo.

### BACKGROUND OF THE INVENTION

In the last decade, transplantation of lungs has become viable. An article published in The Lancet, Vol. 357, March 17, 2001, pages 825-829, discloses a protocol for harvesting lungs from a non-heart-beating donor by intrapleural topical cooling of the lungs within about 1 hour after death followed by harvesting the heart-lung block within about 3 hours. The heart-lung block is evaluated ex-vivo followed by cooling and storage until transplantation or other use.

The evaluation of the lungs take place in a plastic vessel using a specific solution called Steen Solution, available from Vitrolife AB, Sweden. The solution can be characterized as an artificial hyperoncotic serum containing an optimal amount of dextran and is disclosed in WO 2002/35929 A1. This solution is however expensive. In order to reduce the costs, as small amount as possible of the Steen Solution should be used.

During the evaluation, the solution is introduced into the lungs through the pulmonary artery and the solution exits the lungs through the pulmonary veins and is given off to the vessel and collected at the bottom thereof and recirculated. Only about 2.6 liters of solution is required. However, during the preservation and storage, the entire lung should be more or less immersed in said solution, which means that further solution needs to be added. Since the preservation solution does not need to be Steen Solution, the added solution could be another cheaper solution, such as Perfadex, available from Vitrolife AB, Sweden.

However, if the lungs should be preserved for a long time, it would be desirable to use the more expensive solution also for the preservation. Moreover, it is expected that preservation of the organ in Steen Solution or other similar solution would be better than using a solution which is less versatile.

It is with this background that the present invention has been developed.

US 2005/0147958 discloses an apparatus for evaluation and preservation of organs, such as lungs. The apparatus comprises a soft shell bag having a preservation chamber therein. The lungs are placed in a chamber having an arcuate surface in the lower portion of the preservation chamber. Solution is supplied to the pulmonary artery and the pulmonary veins are allowed to drain directly into the preservation chamber. To prevent collapse of the alveoli of the lungs, the lungs are periodically ventilated. This necessitates that the volume defined by the preservation chamber expand and contract to accommodate the corresponding expansion and contraction of the lungs. Accordingly, opening vents allows air movement in and out of preservation chamber. This expansion and contraction can be accomplished through any means for respirating the lungs.

US Patent No 5,586,438 discloses an organ storage device comprising the features of the preamble of claim 1, wherein the device permits both static storage and perfusion of an organ without removing the organ from an organ container. The organ storage device includes a contoured organ container. The organ container is stored and transported in an insulated temperature controlled static storage module. The container module is equipped with monitoring devices for monitoring the organ during storage and transportation. The container module is also equipped with an assembly for connecting the organ container to a perfusion module.

### SUMMARY OF THE INVENTION

Accordingly, an object of the present invention is to mitigate, alleviate or eliminate one or more of the above-identified deficiencies and disadvantages singly or in any combination.

According to the invention there is provided an apparatus for housing an organ from a mammal ex-vivo, for example for evaluation or preservation. The apparatus comprises a vessel comprising a solution suitable for evaluation or preservation of the organ and at least partly surrounding the organ. The apparatus further comprises a displacement device for occupying surplus space inside the vessel for enabling immersion of the organ, wherein said displacement device comprises at least one pressure chamber arranged between the walls of said vessel and said organ, and a means arranged for introducing a medium into said pressure chamber in order to expand the pressure chamber. The means for introducing a medium into said pressure chamber is a suction device connectable to an opening in a top lid of the vessel for generating an underpressure inside said vessel. The pressure chambers are open to the atmospheric pressure, so that gas at atmospheric pressure is introduced into the pressure chambers due to said underpressure.

According to an embodiment, the pressure chamber may be formed by a plastic bag. The plastic bag may be arranged to expand towards the organ in order to fill the spaces surrounding the organ.

According to another embodiment, the plastic bag may have a surface, which has low adherence to the organ. The surface may be provided with channels or protuberances for forming flow channels between said surface and said organ. Several pressure chambers may be arranged inside said vessel along vertical sides thereof.

According to a further embodiment, the pressure chambers may be arranged at the inner side of the lid which is arranged for closing the upper opening of said vessel.

The organ may be at least one organ from the group comprising: lungs, lung-heart- block, heart, kidney, liver, pancreas and small intestines.

### BRIEF DESCRIPTION OF THE DRAWINGS

Further objects, features and advantages of the invention will become apparent from the following detailed description of embodiments of the invention with reference to the drawings, in which:
Fig. 1 is a side view partially in cross-section of a lung evaluation and preservation vessel during an evaluation stage.
Fig. 2 is a side view similar to Fig. 2 during a preservation stage.
Fig. 3 is a side view of a first embodiment of the invention, similar to Fig. 2.
Fig. 4 is a side view similar to Fig. 3 of the first embodiment in an intermediate state of expansion.
Fig. 5 is a side view similar to Fig. 4 of the first embodiment in an end state of expansion.
Fig. 6 is a plan view from above of the first embodiment according to Fig. 3.
Fig. 7 is a plan view similar to Fig. 6 of a second embodiment of the invention.
Fig. 8 is a plan view of a plastic material used in the embodiments.
Fig. 9 is a side view of a further embodiment of the vessel.
Fig. 10 is a top view of the embodiment of the vessel of Fig. 9.
Fig. 11 is a cross-sectional view of the vessel of Fig. 11 taken along line XI-XI.
Fig. 12 is a side view of a still further embodiment of the vessel.

### DETAILED DESCRIPTION OF EMBODIMENTS

Below, several embodiments of the invention will be described with references to the drawings. These embodiments are described in illustrating purpose in order to enable a skilled person to carry out the invention and to disclose the best mode. However, such embodiments do not limit the invention. Moreover, other combinations of the different features are possible within the scope of the invention as defined in the appended claims.

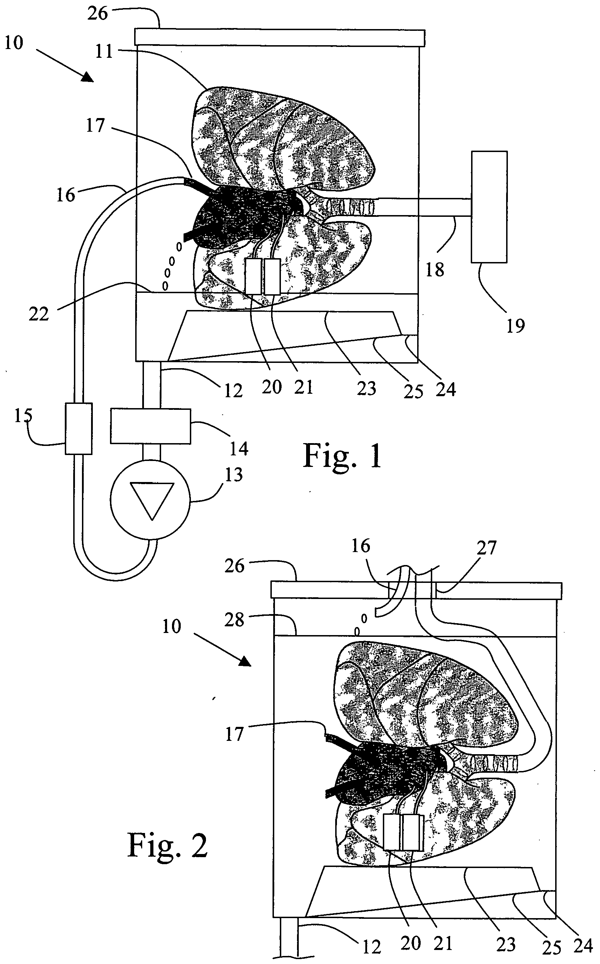

Fig. 1 discloses a vessel 10 for evaluation and preservation of an organ, such as a heart-lung-block 11. The heart-lung block 11 may be arranged at a support 23 at the bottom of the vessel. At each side of the support 23 there may be arranged grooves 24 for collecting solution. The heart-lung-block is shown in a raised position, but it is understood that the heart-lung-block may be arranged in any position, including a lying position.

The vessel comprises an outlet 12 at the bottom for connection to an external circuit comprising a pump 13 and other members 14, 15, such as filters, oxygenators, hard-shell chamber etc normally used in such a system, see for example US 2005/0147958 mentioned above.

During the evaluation stage, an inlet line 16 connects the output of the pump 13 to a pulmonary artery of the lungs in an external circuit 13-16. If the heart is present, as shown in Fig. 1, the inlet line 16 is connected to a catheter 17 connected to the pulmonary artery through an opening in the right ventricle.

A solution or liquid is present in the external circuit 13-16. During the evaluation step, such solution may be Steen Solution mentioned above. There may be about 2.6 liter solution in the external circuit. Initially, the solution is circulated externally of the vessel for priming purposes and for adjusting the parameters of the solution to desired values, such as oxygen and carbon dioxide levels and temperature. Then, the inlet line 16 is connected to the catheter 17 inserted in the pulmonary artery. After the solution has circulated through the lungs, the solution exiting the lungs, which in Fig. 1 takes place via the left atrium, is given off to the vessel and is accumulated at the bottom of the vessel as shown at 22.

A gas line 18 connects a source of gas 19 to the trachea of the lungs for delivery and removal of gas from the lungs and the alveoli of the lungs. The gas may be normal air or a mixture of oxygen, nitrogen, carbon dioxide etc.

Several sensors 20, 21 may be connected to the lungs or heart for measurement of different properties, such as oxygen saturation and carbon dioxide saturation in the solution, temperature and pressure of the solution, for example in the four lung veins opening to the left atrium. There may be separate sensors for each lung half, i.e. one sensor for the left lung and one sensor for the right lung or there may be separate sensors for each blood vessel.

The evaluation may take place immediately or shortly after the harvesting of the lungs from the donor or it may take place after transportation or storage. The lungs are connected as shown in Fig. 1, and the pump 13 is started (after priming) to deliver solution to the lungs to gradually reach a temperature of 37°C. When the lungs are sufficiently warm, for example 32°C, the gas supply is activated for delivering and removing gas to the trachea similar to normal breathing. The solution may be pumped with a speed of about 4 liter per minute, similar to normal heart function. The pump may be continuous or pulsative, for example with 60 beats per minute. The pressure may be regulated to be no more than 20 mmHg.

The functioning of the lungs may be evaluated by monitoring the sensors 20, 21 and other parameters. If the lungs are evaluated to function correctly, it is determined that the lungs are eligible for transplantation or other use.

After evaluation, the temperature of the solution is lowered for core cooling of the lungs, for example to 20 °C. Since the lungs become stiff at low temperature, the gas supply is terminated. After initial core cooling, the inlet line 16 is disconnected and ends freely in the vessel 10 or is clamped. Further solution may be added to the vessel 10 in order to increase the level 22 of solution in the vessel so that the lungs are immersed in the solution. Then, the lungs are topically further cooled until a desired preservation temperature of for example 12°C.

The added solution may be a Perfadex solution. This solution is less expensive than the Steen Solution and is specifically adapted for preservation. There may be added about 5.2 liters. The solution in the vessel 10 is circulated through an oxygenator in order to provide topical extracorporeal membrane oxygenation, topical ECMO, which has been found to function well for the preservation of the lungs.

The above description of a general system may be altered in many respects and is only one possible embodiment.

As shown in Fig. 1, the heart-lung-block is arranged at a support 23 having grooves 24 at the sides of the vessel. The grooves 24 are inclined as shown at 25 for transporting the solution to the outlet 12. The support may have a rounded upper surface. Such support will reduce the amount of solution necessary for the function during the evaluation stage.

The vessel 10 is provided with a closure or lid 26 at the top, so that the organ is available for inspection and for connection of the tubes, catheters and sensors during the evaluation step. It is frequently required to have access to the lungs during the evaluation, so the lungs have to be accessible for example by having the lid 26 removed during the evaluation, which may take place in a sterile or substantially sterile environment.

The inlet line 16 and the gas line 18 are passed through gaskets (not shown) in the sidewall of the vessel. Alternatively, as shown in Fig. 2, the inlet line 16 and the gas line 18 may be passed through an opening 27 in the top lid 26 as shown in Fig. 2.

Fig. 2 shows the vessel 10 during the preservation stage. In this stage, the inlet line 16 is no longer connected to the catheter 17 but opens freely outside the lungs. The lungs are fully immersed in the solution as indicated by liquid level 28. The solution is circulated by the pump 13 (not shown in Fig. 2) and oxygenated so that the lungs receive oxygenation. The solution is maintained at a temperature of for example 12 °C.

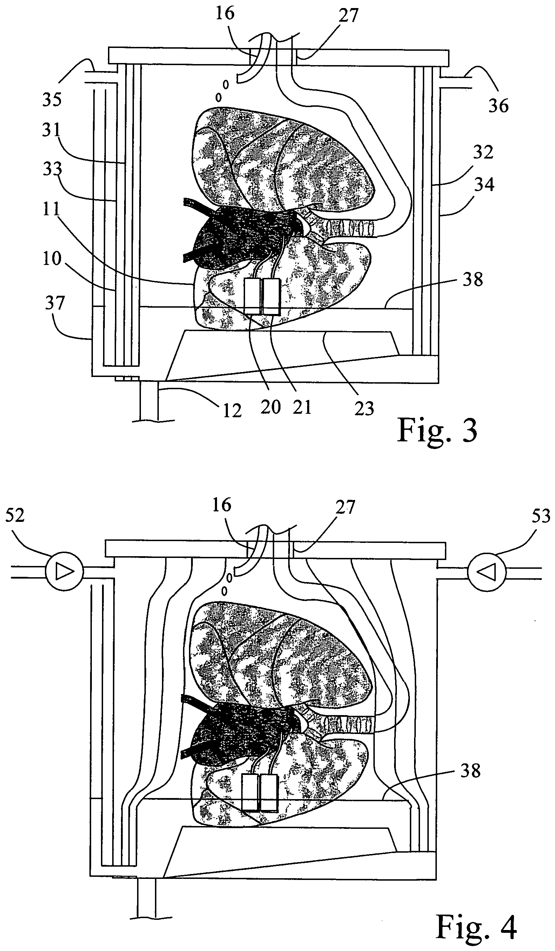

A pressure chamber may be arranged at each longitudinal side of the vessel 10 as shown in Fig. 3.

The pressure chamber shown comprises two plastic bags 31 and 32 formed by a flexible but substantially non-elastic foil of plastics material. Each pressure chamber 31, 32 is shown in the collapsed initial position, in which the pressure chamber is arranged adjacent the sidewall 33, 34 of the vessel 10. Each plastic bag may be arranged in a folded manner as shown so that the plastic bag can be expanded. Three folds are shown in Fig. 3, but other arrangements are possible.

The pressure chambers comprise an inlet 35, 36 which are connected to a source of pressure (not shown), for example a source of gas pressure.

The fluid level in the vessel 10 is visible via an ascension tube 37, which is connected to the vessel and extends outside the vessel 10. The ascension tube 37 is open at the top, so that the fluid level in the ascension tube can adjust itself to the fluid level inside the vessel.

The ascension tube may be integrated in the walls of the vessel.

When gas is supplied via pumps 52, 53 to the pressure chamber 31, 32, the plastic bag starts to expand as shown in Fig. 4. Since the solution in the bottom of the vessel exerts a hydrostatic pressure equal to the height of the water pillar, the expansion of the pressure chambers takes place substantially only above the level 38 of the solution. Each plastic bag fills the open space between the vessel 10 and the lungs 11. The pressure inside each pressure chamber is still low, approximately equal to the atmospheric pressure.

Since a relatively large volume of gas is supplied, it takes some time for this expansion. The level 38 of solution does not rise or rise only to a small extent as shown in Fig. 4. The air or gas inside the vessel passes out to the atmosphere via opening 27.

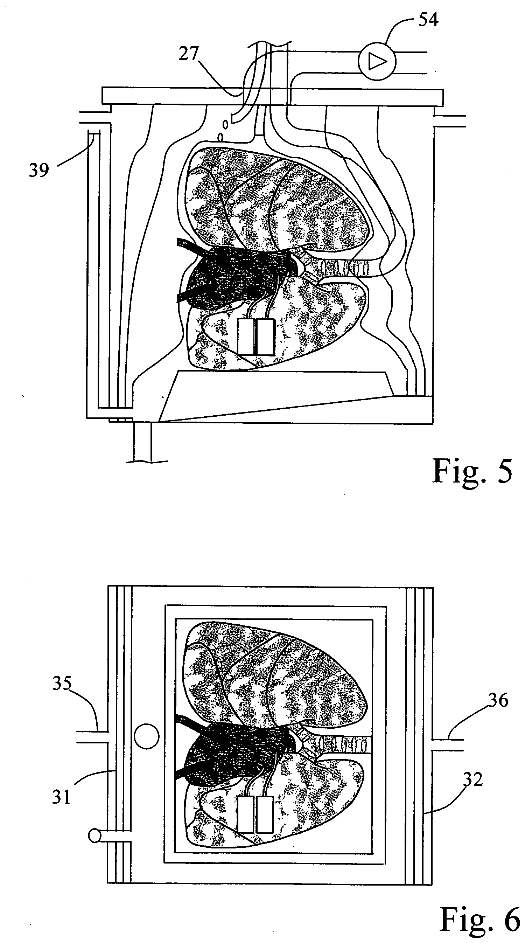

When almost all of the air space of the vessel above the solution level has been filled by the expansions of the plastic bags, the pressure in the plastic bags starts to increase. Then, the solution level 38 in the vessel increases correspondingly as the plastic bags expand into the volume previously occupied by the solution. When the pressure in the plastic bags has increased to for example 20 cm water-pillar, the solution level 39 has increased by 20 cm as indicated by the ascension tube, see Fig. 5. In this position, the entire lung is immersed in the solution.

The pressure chambers are arranged along the longitudinal or transversal sides of the vessel in order to be able to fill the air space of the vessel as completely as possible, as is shown in Fig. 6, which shows the vessel 10 seen from above. The lungs are shown in a lying position, but the position may be any position desired. The pressure chamber is limited at one side by the sidewall of the vessel and at the other side by the plastic bag. The plastic bag is attached to the vessel sidewall at any suitable manner.

In another embodiment, the pressure chamber is formed entirely by the plastic bag, which at one side abuts the sidewall of the vessel and expands at the other side. Each plastic bag forms a closed space. The plastic bag may be fixed at the upper boarder of the vessel by any suitable means.

In a further embodiment, there may be arranged several plastic bags at the inside surface of the lid. The lid may be removed during the evaluation stage for having access to the lungs. Then, the lid is added and the plastic bags are expanded in the downward direction. The plastic bags may be exposed to vacuum during the manufacturing so that the plastic bags are fully collapsed towards the lower surface of the lid. When the gas supply is opened, the plastic bag falls down and expands.

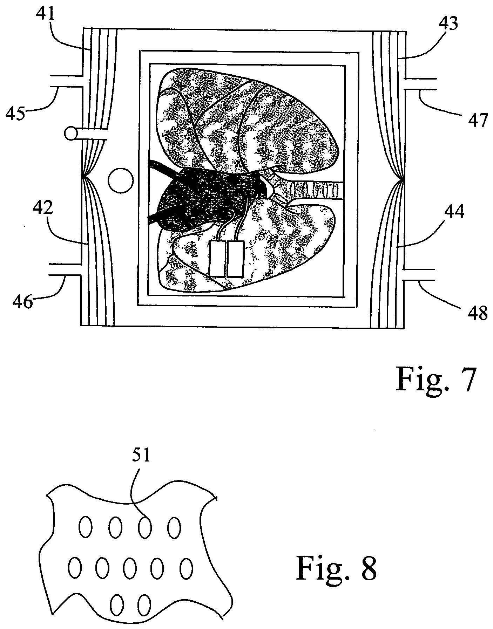

Another arrangement is shown in Fig. 7, in which four pressure chambers 41, 42, 43, 44 are arranged adjacent each corner of the vessel. Each pressure chamber is provided with a gas inlet 45, 46, 47, and 48 for the supply of gas.

The pressure chambers or plastic bags may be filled with a gas having substantially lower specific density than the preservation solution or liquid in the vessel. This means that the pressure inside the pressure chamber will be equal irrespectively of the height position inside the vessel.

The plastic bags will expand first in the upper part of the vessel, which is filled with air and where there is substantially no solution, so that the plastic bags occupies all free space around the organ, which is above the solution level. The pressure inside the pressure chambers is still only about atmospheric pressure.

Then, at increased pressure in the pressure chambers, the solution level will rise as the pressure chambers displaces the solution until it covers the lungs as desired.

In an alternative embodiment, the pressure medium is a liquid having a density, which is lower than the density of the preservation solution. Then, the function will be substantially the same, but the solution level will start rising in an earlier phase compared when gas is used as pressure medium.

In a further alternative embodiment, the gas inlets 35, 36 or 45, 46, 47, 48 are connected to the atmosphere, while the opening 27 is connected to a suction device 54, which upon activation sucks out air from the interior of the vessel 10, which vessel 10 in this embodiment is substantially airtight, as shown in Fig. 5. When air is sucked out from vessel 10, the pressure chambers 31, 32 or 41, 42, 43, 44, will expand in the same manner as described above, since air moves into the pressure chamber via the inlets, which are open to the atmosphere. When substantially all air is sucked out of the vessel, and upon application of an underpressure to the vessel 10, the liquid level 38 starts to rise as shown in Figs. 4 and 5 in exactly the same manner. The difference is that atmospheric pressure prevails in the pressure chambers while an underpressure or subpressure of for example 5 to 20 cm water-pillar below the atmospheric pressure is present inside the vessel 10 between the walls 33 and 34. There is a good reason to maintain an underpressure around the lungs, since the lungs in the normal operation inside the body is exposed to a slight under pressure. Thus, the method according to the present embodiment may be said to be more physiological. The upper part of the lung is exposed to substantially atmospheric pressure and the lower portion of the lung is exposed to an under pressure corresponding to the water-pillar from the top to the bottom of the lung. The pressure chambers may be connected to a source of gas at substantially atmospheric pressure in this method, or directly to the atmosphere.

Since the plastic bag can be slightly permeable to the gas, the preservation solution can receive some gas from the gas inside the pressure chambers. This feature can be used for gas exchange with the solution. Then gas supplied to the bag could be oxygen or any gas mixture to achieve correct parameters of the solution.

There is a risk that the plastic material may adhere to the lungs and prevent the preservation solution from coming into contact with the outer surface of the lungs, at least at certain locations. This risk may be avoided by coating the exterior of the lungs with a packing in linen similar to the cloths used during surgery. Another alternative is to form the outer surface of the plastic bag with a hydrophilic surface. Still another alternative is to arrange protrusions or channels in the surface of the plastic bag.

Fig. 8 shows the surface of the plastic bag facing the lungs. The surface is provided with small protrusions 51 as shown in Fig. 8, having a lateral dimension of for example 3^{∗}5 mm and a height of for example about 1 mm. The preservation solution may pass beyond the protrusions, which may be arranged staggered as shown.

Other organs than the lungs may benefit of the present embodiments. Thus, lungs without the heart may be used. Other organs are heart, kidney, liver, pancreas, small intestines, etc. The organs may be harvested from a human, or from another mammal, such as a pig, horse, cow, etc. A pig heart or kidney may possibly in the future be used for xeno-transplantation to a human.

The solutions specifically mentioned above are Steen Solution and Perfadex. Other solutions may be used in the embodiments. There is no requirement that the solution should be cheap or expensive. There may be other reasons not to add further solution during evaluation and/or preservation of organs. For example, the addition of further solution may alter the oncotic or osmotic pressure of the solution resulting in risk for edema. Moreover, addition of solution may risk addition of non-wanted agents such as bacteria or poisonous substances or endotoxins.

The material used in the pressure chamber should be sufficiently flexible to allow expansion. A flexible plastic material may be polyurethane, polycarbonate, polyethene, polyvinyl chloride, PET, or polytetrafluorethen.

The material in the pressure chamber does not need to be elastic. However, a certain elasticity may help in some applications. A non-elastic material may be used in other applications. The material in the pressure chamber may be transparent so that the organ may be inspected during use.

The vessel may also be transparent for the same reason.

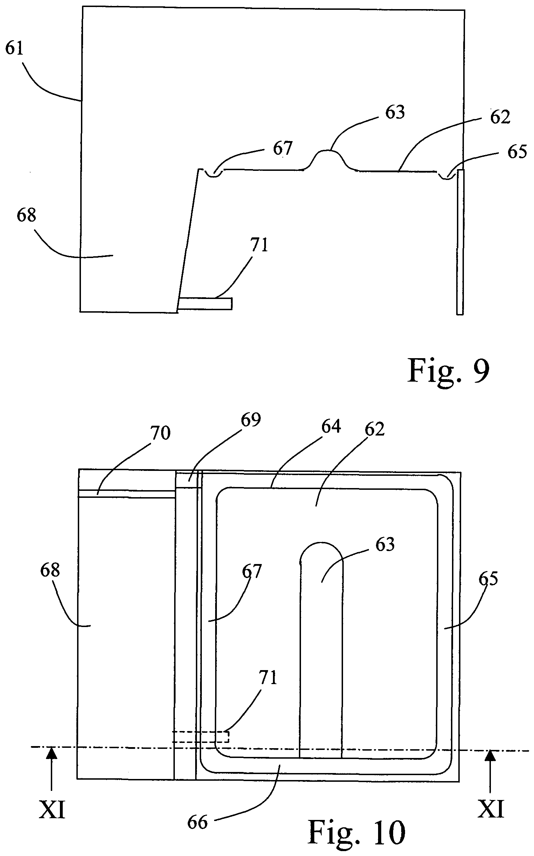

Fig. 9 discloses a further embodiment of a vessel intended for lungs or a heart-lung-block. It is noted that the lungs comprise a recess where the spine is normally positioned. This spine recess can be used for orientation purpose of the lungs.

The vessel 61 shown in Fig. 9 comprises a support or surface 62 at which the lung is to be positioned. The surface 62 comprises a ridge 63 intended for being positioned at the spine recess of the lung. In this manner, the lung is properly oriented.

At each side, the surface 62 comprises recesses 64, 65, 66, 67 intended to conduct the solution from the surface 62 towards a collection space 68. The collection space 68 is arranged at the side of the vessel 61 as is shown in Fig. 9 and Fig. 10. The recesses 64, 65, 66, 67 are connected to the collection space 68 via a recess 69 and a foam filter 70. From the collection space 68, the solution leaves the vessel 61 via an outlet 71.

The collection space 68 is used for enclosing the fluid required for the process, which may be an evaluation fluid and/or a preservation fluid.

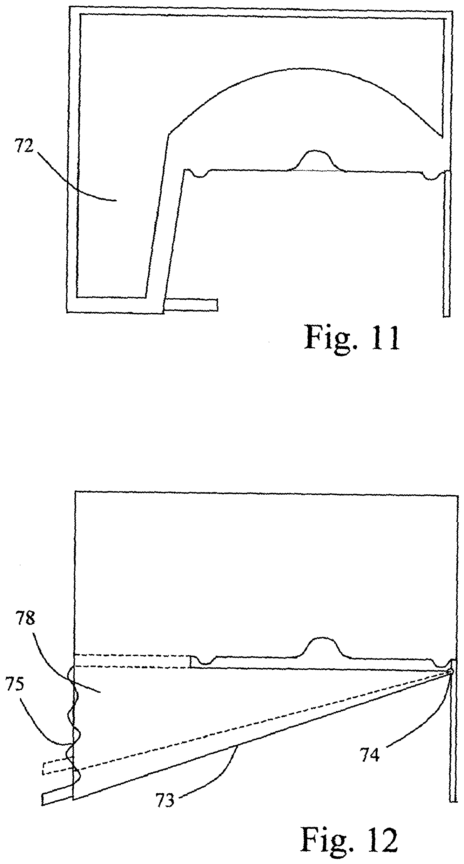

When the organ is to be preserved and/or stored, it may be desired to cover the organ with fluid. In order to accomplish this, a body 72 may be arranged in the collection space 68 as shown in Fig. 11. The displacement device or body 72 is shaped to fit into the collection space 68 and displace much of the fluid in the collection space. In this way, the fluid will instead immerse the organ.

Another embodiment for immersing the organ is shown in Fig. 12. In this embodiment, the collection space 78 has a variable volume. The collection space 78 comprises a bottom surface 73, which at the right end in Fig. 12 is pivotable around a shaft 74. The left portion of the collection space 78 is formed by a flexible wall 75. In this way, the volume of the collection space 78 may be adjusted as desired.

Other manners of adjusting the volume of the collection space may also be used, such as plungers or expandable balloons arranged inside the collection space.

Although the present invention has been described above with reference to specific embodiment, it is not intended to be limited to the specific form set forth herein. Rather, the invention is limited only by the accompanying claims and other embodiments than those specifically described above are equally possible within the scope of these appended claims.

In the claims, the term "comprises/comprising" does not exclude the presence of other elements or steps. Furthermore, although individually listed, a plurality of means, elements or method steps may be implemented by e.g. a single unit or process. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims

1. An apparatus for housing an organ from a mammal ex-vivo, for example for evaluation or preservation, comprising:
a vessel (10; 61) comprising a solution suitable for evaluation or preservation of the organ and at least partly surrounding the organ:
a displacement device (31, 32; 72) for occupying surplus space inside the vessel for enabling immersion of the organ, wherein said displacement device comprises:
at least one pressure chamber arranged between the walls of said vessel and said organ, and a means for introducing a medium into said pressure chamber in order to expand the pressure chamber;
**characterized in that**
said means for introducing a medium into said pressure chamber is a suction device (54) connectable to an opening (27) in a top lid (26) of the vessel for generating an underpressure inside said vessel wherein the pressure chambers are open to the atmospheric pressure, so that gas at atmospheric pressure is introduced into the pressure chambers due to said underpressure.

2. The apparatus according claim 1, wherein each pressure chamber is formed by a plastic bag.

3. The apparatus according to claim 2, wherein said plastic bag is arranged to expand towards the organ in order to fill the spaces surrounding the organ.

4. The apparatus according to claim 2 or 3, wherein said plastic bag has a surface, which has low adherence to the organ.

5. The apparatus according to claim 4, wherein said surface is provided with channels or protuberances for forming flow channels between said surface and said organ.

6. The apparatus according to any one of claims 1 to 5, further comprising several pressure chambers arranged inside said vessel along vertical sides thereof.

7. The apparatus according to any one of claims 1 to 5, wherein said pressure chambers are arranged at the inner side of a lid which is arranged for closing the upper opening of said vessel.

8. The apparatus according to any one of the previous claims, wherein said organ is at least one organ from the group comprising: lungs, lung-heart-block, heart, kidney, liver, pancreas and small intestines.

## Patentansprüche

1. Vorrichtung zur ex-vivo-Aufnahme eines Organs von einem Säugetier, beispielsweise zur Bewertung oder Konservierung, umfassend:
ein Gefäß (10; 61), das eine Lösung umfasst, die sich zum Bewerten oder Konservieren des Organs eignet, und das Organ zumindest teilweise umgibt;
eine Verdrängungsvorrichtung (31, 32; 72) zum Einnehmen von ungenutztem Platz in dem Gefäß, damit sich das Organ eintauchen lässt, wobei die Verdrängungsvorrichtung umfasst:
mindestens eine Druckkammer, die zwischen den Wänden des Gefäßes und dem Organ angeordnet ist, und ein Mittel zum Einleiten eines Mediums in die Druckkammer, damit die Druckkammer gedehnt wird;
**dadurch gekennzeichnet, dass**
das Mittel zum Einleiten eines Mediums in die Druckkammer eine Ansaugvorrichtung (54) ist, die mit einer Öffnung (27) in einem oberen Deckel (26) des Gefäßes verbindbar ist, um einen Unterdruck in dem Gefäß zu erzeugen, wobei die Druckkammern zum Atmosphärendruck hin offen sind, sodass Gas bei Atmosphärendruck durch den Unterdruck in die Druckkammern eingeleitet wird.

2. Vorrichtung nach Anspruch 1, wobei jede Druckkammer von einem Kunststoffbeutel gebildet ist.

3. Vorrichtung nach Anspruch 2, wobei der Kunststoffbeutel so angeordnet ist, dass er sich in Richtung des Organs ausdehnt, damit er die das Organ umgebenden Freiräume füllt.

4. Vorrichtung nach Anspruch 2 oder 3, wobei der Kunststoffbeutel eine Oberfläche mit einer niedrigen Anhaftung gegenüber dem Organ aufweist.

5. Vorrichtung nach Anspruch 4, wobei die Oberfläche mit Kanälen oder Vorwölbungen zum Ausbilden von Strömungskanälen zwischen der Oberfläche und dem Organ versehen ist.

6. Vorrichtung nach einem der Ansprüche 1 bis 5, ferner umfassend mehrere Druckkammern, die in dem Gefäß entlang von senkrechten Seiten davon angeordnet sind.

7. Vorrichtung nach einem der Ansprüche 1 bis 5, wobei die Druckkammern an der Innenseite eines Deckels angeordnet sind, der zum Verschließen der oberen Öffnung des Gefäßes angeordnet ist.

8. Vorrichtung nach einem der vorhergehenden Ansprüche, wobei das Organ mindestens ein Organ aus der Gruppe ist, die Folgendes umfasst: Lunge, Herz-Lungen-Block, Herz, Niere, Leber, Bauchspeicheldrüse und Dünndarm.

## Revendications

1. Dispositif destiné à contenir ex vivo un organe provenant d'un mammifère, par exemple pour des opérations d'évaluation ou de conservation, comprenant :
un récipient (10 ; 61) comprenant une solution adaptée pour des opérations d'évaluation ou de conservation de l'organe et entourant au moins en partie l'organe ;
un dispositif de déplacement (31, 32 ; 72) destiné à occuper un espace excédentaire à l'intérieur du récipient pour permettre l'immersion de l'organe, ledit dispositif de déplacement comprenant :
au moins une chambre de pression disposée entre les parois dudit récipient et ledit organe et un moyen destiné à introduire un milieu dans ladite chambre de pression afin de dilater la chambre de pression ;
**caractérisé en ce que**
ledit moyen destiné à introduire un milieu dans ladite chambre de pression est un dispositif d'aspiration (54) pouvant être relié à une ouverture (27) dans un couvercle supérieur (26) du récipient pour générer une dépression à l'intérieur dudit récipient, les chambres de pression étant ouvertes à la pression atmosphérique, de telle sorte que du gaz sous pression atmosphérique est introduit dans les chambres de pression en raison de ladite dépression.

2. Dispositif selon la revendication 1, dans lequel chaque chambre de pression est formée par un sac en plastique.

3. Dispositif selon la revendication 2, dans lequel ledit sac en plastique est conçu pour se dilater vers l'organe afin de remplir les espaces entourant l'organe.

4. Dispositif selon la revendication 2 ou 3, dans lequel ledit sac en plastique présente une surface qui possède une faible capacité d'adhérence avec l'organe.

5. Dispositif selon la revendication 4, dans lequel ladite surface est pourvue de canaux ou protubérances pour former des canaux d'écoulement entre ladite surface et ledit organe.

6. Dispositif selon l'une quelconque des revendications 1 à 5, comprenant en outre plusieurs chambres de pression disposées à l'intérieur dudit récipient le long de côtés verticaux de celui-ci.

7. Dispositif selon l'une quelconque des revendications 1 à 5, dans lequel lesdites chambres de pression sont disposées sur le côté intérieur d'un couvercle qui est conçu pour fermer l'ouverture supérieure dudit récipient.

8. Dispositif selon l'une quelconque des revendications précédentes, dans lequel ledit organe est au moins un organe parmi le groupe comprenant : des poumons, un bloc coeur-poumons, un coeur, un rein, un foie, un pancréas et un intestin grêle.
